# EUROPEAN PATENT SPECIFICATION

(11) **EP 4 398 710 B1**
(45) Date of publication and mention of the grant of the patent: **11.11.2026**
(21) Application number: 22783231.8
(22) Date of filing: 06.09.2022
(51) Int. Cl.: A01G 24/50, A01G 31/02, A01G 9/04

(54) **HYDROPONIC CULTIVATION SYSTEM**
HYDROPONISCHES KULTIVIERUNGSSYSTEM
SYSTÈME DE CULTURE HYDROPONIQUE

(30) Priority: 07.09.2021 US 202117467992
(43) Date of publication of application: 17.07.2024
(73) Proprietor: DuPont Safety & Construction, Inc., Wilmington, DE 19805 (US); Pioneer Hi-Bred International, Inc., Johnston, Iowa 50131-1014 (US)
(72) Inventor: CHERUKUPALLI, Srinivas, Telangana 500087 (IN); BRABBS, Noel Stephen, 8354 Garnich (LU); GAIKWAD, Narayan Pandurang, Pune, State: Maharashtra, India Indapur (IN); MANJARAMKAR, Virendra Gangaram, Nanded, State: Maharashtra, India Nanded (IN)
(74) Representative: Abitz & Partner
(86) International application number: PCT/US2022/075964
(87) International publication number: WO 2023/039366

(56) References cited:
- JP-A- 2000 253 764
- JP-A- 2010 148 376
- JP-A- 2016 202 170

## Description

### FIELD OF THE INVENTION

Disclosed embodiments relate generally to hydroponics, and more particularly to a system for efficient hydroponic cultivation.

### BACKGROUND

Hydroponics is a method of growing plants primarily without soil in an oxygenated, water-based, nutrient rich solution. Hydroponic cultivation systems can be used to grow plants in various environments, including greenhouse and outdoor environments. One well-known type of hydroponic system is the nutrient film technique or NFT system. In NFT systems, a shallow stream of oxygenated, water-based, nutrient rich solution flows continuously through channels, e.g., pipes or gutters made from plastic or water-resistant, non-air-permeable, polymer sheets. Plants are suspended above the channels and their roots hang down partially into the continuously flowing solution.

Another well-known version of a hydroponic cultivation system is the Deep Water Culture or DWC system. In DWC systems, oxygenated, water-based, nutrient rich solution is maintained in a reservoir or container, e.g., tubs or elongated troughs made from plastic or water-resistant, non-air-permeable, polymer sheets. Plants are suspended above the tubs or elongated troughs and their roots are partially or completely submerged in the solution.

Such well-known hydroponic systems, however, rely heavily on electrical devices such as pumps, aerators, motors, and paddles to (i) maintain a sufficient amount and/or continuous flow of solution over the roots of the plants, (ii) maintain the necessary oxygen levels in the solution, and/or (iii) provide fresh solution to the roots of the plants. Because such well-known hydroponic systems are critically dependent on electronic devices, any disruption to these devices, such as the loss of electricity, can cause an immediate break

down of the entire system, leading to significant damage to or loss of the plants. In addition, the electrical power required to operate such devices can be a significant cost burden in the operation of these hydroponic systems. Hydroponic systems are disclosed in JP 2016 202170 A, JP 2000 253764 A and JP 2010 148376 A.

Accordingly, there is a need and desire for a more productive, efficient, reliable, and cost-effective system and method of hydroponic cultivation.

### SUMMARY

According to the invention, the hydroponic system comprises one or more plant support structures that hold plant matter. The one or more plant support structures have one or more holes. The system also comprises one or more housing membranes that are air-permeable and water-resistant, house a solution and at least a portion of the one or more plant support structures, and have one or more openings into which at least a portion of the one or more plant support structures fit. The system further comprises one or more frames that support the one or more housing membranes.

In one embodiment, the one or more housing membranes house at least a portion of the one or more plant support structures. In another embodiment, the one or more plant support structures further comprise a soilless plant medium. In another embodiment, the one or more plant support structures are connected to the one or more housing membranes or the one or more frames.

In one embodiment, the one or more housing membranes have a Gurley Hill porosity of from about 1 to about 100 seconds per 100 cc air. In another embodiment, the one or more housing membranes have a Gurley Hill porosity of from about 10 to about 50 seconds per 100 cc air. In another embodiment, the one or more housing membranes have a resistance to water penetration of from about 50 to about 1000 cm of H₂O. In another embodiment, the one or more housing membranes have a resistance to water penetration of from about 100 to about 500 cm of H₂O. In another embodiment, the one or more housing membranes have a total reflectivity of greater than about 80%. In another embodiment, the one or more housing membranes have a moisture vapor transmission rate of from about 400 to about 3500 g/m²/day. In another embodiment, the one or more housing membranes have a moisture vapor transmission rate of from about 750 to about 2000 g/m²/day. In another embodiment, the one or more housing membranes have a maximum elongation of less than about 40%.

In one embodiment, the one or more housing membranes are polyolefin. In another embodiment, the one or more housing membranes are polyethylene. In another embodiment, the one or more housing membranes are polypropylene. In another embodiment, the one or more housing membranes are nonwoven flash spun plexifilamentary sheet of polyethylene.

In one embodiment, at least one of the one or more housing membranes is one component. In another embodiment, at least one of the one or more housing membranes has two or more components. In another embodiment, the one or more housing membranes is at least 10 housing membranes.

In an embodiment, the one or more plant support structures are soilless, comprise a soilless plant medium, and have one or more holes in the sides or base of the one or more plant support structures. The one or more housing membranes are polyolefin, and have a Gurley Hill porosity of from about 1 to about 100 seconds per 100 cc air, a resistance to water penetration of from about 100 to about 500 cm of H₂O, and a moisture vapor transmission rate of from about 400 to about 3500 g/m²/day g/m²/day. The solution comprises water and nutrients.

In one embodiment, the one or more plant support structures further comprise a soilless plant medium. In another embodiment, the one or more plant support structures are connected to the one or more housing membranes or the one or more frames.

In one embodiment, the one or more housing membranes have a Gurley Hill porosity of from about 1 to about 100 seconds per 100 cc air. In another embodiment, the one or more housing membranes have a Gurley Hill porosity of from about 10 to about 50 seconds per 100 cc air. In another embodiment, the one or more housing membranes have a resistance to water penetration of from about 50 to about 1000 cm of H₂O. In another embodiment, the one or more housing membranes have a resistance to water penetration of from about 100 to about 500 cm of H₂O. In another embodiment, the one or more housing membranes have a total reflectivity of greater than about 80%. In another embodiment, the one or more housing membranes have a moisture vapor transmission rate of from about 400 to about 3500 g/m²/day. In another embodiment, the one or more housing membranes have a moisture vapor transmission rate of from about 750 to about 2000 g/m²/day. In another embodiment, the one or more housing membranes have a maximum elongation of less than about 40%.

In one embodiment, the one or more housing membranes are polyolefin. In another embodiment, the one or more housing membranes are polyethylene. In another embodiment, the one or more housing membranes are polypropylene. In another embodiment, the one or more housing membranes are nonwoven flash spun plexifilamentary sheet of polyethylene.

In one embodiment, at least one of the one or more housing membranes is one component. In another embodiment, at least one of the one or more housing membranes has two or more components. In another embodiment, the one or more housing membranes is at least 10 housing membranes. In another embodiment, the one or more housing membranes is at least 100 housing membranes.

### DESCRIPTION OF DRAWINGS

FIG. 1 is a cross-sectional side view of a hydroponic system according to an exemplary embodiment;
FIG. 2 is a perspective view of a hydroponic system with a plurality of plant support structures according to an exemplary embodiment;
FIG. 3 is a perspective view of a hydroponic system with one plant support structure that holds a plurality of plant matter according to an exemplary embodiment;
FIG. 4 is a front view of a hydroponic system with a plurality of housing membranes arranged vertically according to an exemplary embodiment;
FIG. 5 is a side view of a hydroponic system with a plurality of housing membranes arranged horizontally and vertically according to an exemplary embodiment;
FIG. 6 is a flowchart of a method for growing plants according to an exemplary embodiment.

### DETAILED DESCRIPTION

In the following detailed description, reference is made to the accompanying drawings which form a part hereof, and which illustrate specific embodiments of the invention. These embodiments are described in sufficient detail to enable those of ordinary skill in the art to make and use them. It is also understood that structural, logical, or procedural changes may be made to the specific embodiments disclosed herein without departing from the scope of the invention.

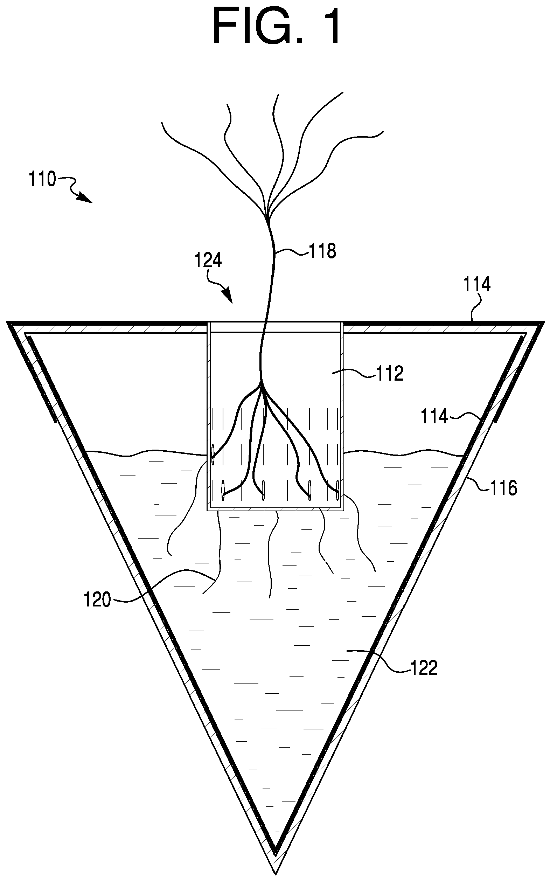

FIG. 1 illustrates an exemplary hydroponic system 110 for growing plants. The hydroponic system 110 comprises one or more plant support structures 112, a housing membrane 114, and a frame 116.

As shown in FIG. 1, the one or more plant support structures 112 are containers that hold plant matter 118. The one or more plant support structures 112 may be constructed from one or more of any suitable material known in the art, including, but not limited to, plastic, foam, rubber, glass, ceramic, metal, alloys, cellulose or other plant-derived materials, and composites thereof, and in one or more of any suitable form of material known in the art, including, but not limited to, rigid materials, flexible materials, woven fabrics, non-woven fabrics, collars, and nets.

As used herein, "hold" means to directly or indirectly support, hold, and/or house. As also used herein, "plant matter" refers to one or more seeds, cuttings, or plants, and may or may not include a seed plug or a self-supporting block of porous material. The seed plugs or self-supporting blocks of porous material may be one or more of any suitable material known in the art, including, but not limited to, open polymer foams, mineral wool, rock wool, compressed coconut fiber, and peat moss. The one or more plant support structures 112 may be any suitable shape or size.

As shown in FIG. 1, the one or more plant support structures 112 have one or more holes in the sides and/or base of the one or more plant support structures 112. The holes in the one or more plant support structures 112 allow a solution 122 to reach the plant matter 118 inside of the one or more plant support structures 112 and allow the roots 120 of the plant matter 118 to extend outside the one or more plant support structures 112 into the housing membrane 114, where they can grow and further absorb water and nutrients from the solution 122.

In some embodiments, the one or more plant support structures 112 may contain a soilless plant medium. The soilless plant medium may be any medium for hydroponic systems known in the art, including, but not limited to, coconut coir, lightweight expanded clay aggregate (LECA), rockwool, perlite, vermiculite, sand, gravel, growstones, rice hull, peat moss, or any combination of mediums.

As shown in Fig. 1, the housing membrane 114 houses the one or more plant support structures 112 and the solution 122. In some embodiments, the housing membrane 114 may completely house the one or more plant support structures 112 and in other embodiments the housing membrane 114 may partially house the one or more plant support structures 112. The one or more plant support structures 112 may be positioned anywhere along the housing membrane 114 and in any manner, such as randomly or in rows. As shown in FIG. 1, the housing membrane 114 is in the shape of a triangular prism. However, in some embodiments, the housing membrane 114 may be any suitable shape or size. The housing membrane 114 includes one or more openings 124 for the one or more plant support structures 112 to completely or partially fit into. The one or more openings 124 may be any suitable shape or size, and may be positioned anywhere on the housing membrane 114 and in any manner, such as randomly or in rows. In some embodiments, the one or more plant support structures 112 may be connected to the housing membrane 114 and/or frame 116 in any suitable manner known in the art. As used herein, "connected to" means directly or indirectly fixed to, attached to, connected to, held by, and/or supported by. In other embodiments, the one or more plant support structures 112 may not be connected to the housing membrane 114 and/or frame 116, and instead may be separately suspended over and/or into the housing membrane 114 in any suitable manner known in the art. In other embodiments, the one or more plant support structures 112 may not be connected to the housing membrane 114 and/or frame 116, and instead may float on the solution 122 within the housing membrane 114.

As shown in FIG. 1, the top of the one or more plant support structures 112 is parallel to and flush with the top of the housing membrane 114. However, in some embodiments, the top of the one or more plant support structures 112 may be above or below the top of the housing membrane 114. In some embodiments, the one or more plant support structures 112 may also be positioned at any angle with respect to the top of the housing membrane 114 and in any direction. In some embodiments, the one or more plant support structures 112 occupy less than about 80% of the volume within the housing membrane 114, in other embodiments less than about 50% of the volume within the housing membrane 114, in other embodiments less than about 20% of the volume within the housing membrane 114, and in other embodiments less than about 10% of the volume within the housing membrane 114.

The housing membrane 114 may be constructed from one or more of any suitable material known in the art that is air-permeable and water-resistant. In some embodiments, the housing membrane 114 may be an air-permeable and water-resistant polyolefin, polyamide, polyaramid, polyester, polyimide, polyacrylate, poly(tetrafluoroethylene), copolymer comprising tetrafluoroethylene or other fluorinated copolymer, and/or hybrids and mixtures thereof.

As used herein, "polyolefin" is intended to mean any of a series of largely saturated polymeric hydrocarbons composed only of carbon and hydrogen. Typical polyolefins include, but are not limited to, polyethylene, polypropylene, polymethylpentene, and copolymers comprising various combinations of the monomers ethylene, propylene, and methylpentene.

As used herein, "polyethylene" is intended to encompass not only homopolymers of ethylene, but also copolymers wherein at least 85% of the recurring units are ethylene units such as copolymers of ethylene and alpha-olefins. Preferred polyethylenes include low-density polyethylene, linear low-density polyethylene, and high-density polyethylene.

As used herein, "polypropylene" is intended to embrace not only homopolymers of propylene but also copolymers wherein at least 85% of the recurring units are propylene units. Preferred polypropylene polymers include isotactic polypropylene and syndiotactic polypropylene.

The air-permeability of the housing membrane 114 allows for the passage of oxygen into the housing membrane 114 and the exit of carbon dioxide out of the housing membrane 114. In some embodiments, the housing membrane 114 has a Gurley Hill porosity, according to ISO 5636-5, of less than about 1000 seconds per 100 cc air, in other embodiments of less than about 500 seconds per 100 cc air, in other embodiments less than about 100 seconds per 100 cc air, in other embodiments less than about 50 seconds per 100 cc air, in other embodiments less than about 10 seconds per 100 cc air, in other embodiments less than about 1 second per 100 cc air, in other embodiments from about 0.5 to about 1000 seconds per 100 cc air, in other embodiments from about 1 to about 500 seconds per 100 cc air, in other embodiments from about 1 to about 100 seconds per 100 cc air, and in other embodiments from about 10 to about 50 seconds per 100 cc air. This property is a measure of how long it takes a defined volume of air to pass through an area of porous material wherein a certain pressure gradient exists; therefore, lower numbers mean the material is more air-permeable, and higher numbers mean the material is less air-permeable. The water-resistance of the housing membrane 114 allows the solution 122 to remain within the housing membrane 114 without leaking. In some embodiments, the housing membrane 114 has a resistance to water penetration (i.e., hydrostatic head), as measured using a hydrostatic pressure tester, for example, available as FX 3000 from Textest Instruments (Zurich, Switzerland), according to EN 20811, of greater than about 50 cm of H₂O, in other embodiments of greater than about 100 cm of H₂O, in other embodiments from about 50 cm of H₂O to about 1000 cm of H₂O, in other embodiments from about 100 to about 500 cm of H₂O, in other embodiments from about 100 to about 350 cm of H₂O, and in other embodiments from about 100 to about 200 cm of H₂O.

In some embodiments, the housing membrane 114 may also be constructed from one or more of any suitable material known in the art that is light reflective. In some embodiments, the housing membrane 114 may also function as a reflective barrier, meaning that the portion of incident light not transmitted to the interior is reflected from the surface, rather than being absorbed in the material itself. The reflection of solar radiation by the material prevents the exterior of housing membrane 114 from over-heating, thereby helping to keep the solution 122, and soilless plant medium (if used), cooler. Studies by Sattelmacher et al. and Du et al. indicate that higher root temperature results in the reduction of root growth and a subsequent decline of leaf expansion. (*See* Sattelmacher, B., Gerendas, J., Thoms, K., Brück, H., & Bagdady, N. H. (1993). Interaction Between Root Growth and Mineral Nutrition. Environmental and Experimental Botany, Vol. 33, No. 1, pp. 63-73; Du, Y.C. & Tachibana, S. (1994). Effect of Supraoptimal Root Temperature on the Growth, Root Respiration and Sugar Content of Cucumber Plants. Scientia Horticulturae, Vol. 58, pp. 289-301). In addition, solubility of oxygen in nutrient solution also decreases with an increase of temperature, which may adversely affect plant growth. (*See* Du et al., Effect of Supraoptimal Root Temperature on the Growth, Root Respiration and Sugar Content of Cucumber Plants). Additionally, photosynthetically active light reflected from the housing membrane 114 is available to be absorbed by the leaves of the plant matter 118 to further encourage their growth. In some embodiments, the housing membrane 114 has a total reflectivity, as measured using a spectrometer, for example, available as Lambda 650 UV/Vis Spectrophotometer from PerkinElmer (Waltham, MA, U.S.A.), according to ASTM E1164-02 in the range of 350-1050 nm, of greater than about 65%, in some embodiments greater than about 80%, in some embodiments greater than about 90 %, and in some embodiments greater than about 95%.

In some embodiments, the housing membrane 114 has a Moisture Vapor Transmission Rate (MVTR), as measured using, for example, an FX 3150 from Textest Instruments (Zurich, Switzerland), according to ATSM E96, of greater than 100 g/m²/day (grams per square meter per day), in other embodiments greater than 400 g/m²/day, in other embodiments greater than 1000 g/m²/day, in other embodiments from about 100 to about 8000 g/m²/day, in other embodiments from about 400 to about 3500 g/m²/day, and in other embodiments from about 750 to about 2000 g/m²/day.

In some embodiments, the housing membrane 114 has a low elasticity allowing it to maintain its shape in areas that are not in direct contact with the frame 116 when the housing membrane 114 is partially or completely filled by the solution 122. In some embodiments, the housing membrane 114 has an elastic modulus, as measured using a cross-sectional area calculated from a thickness determined by EN ISO 534, according to a standard tensile properties test method EN 12311-1, of greater than about 50 MPa, in other embodiments greater than about 100MPa, in other embodiments greater than about 200MPa, and in other embodiments greater than about 300MPa. In other embodiments, the maximum elongation of the housing membrane 114 according to EN 12311-1 is less than about 40%, in other embodiments less than about 30%, and in other embodiments less than about 20%.

The housing membrane 114 may be in one or more of any suitable form of material known in the art, including, but not limited to, sheets, fabrics, films, microporous films, membranes, laminates, or combinations thereof. In some embodiments, the housing membrane 114 may be a woven, nonwoven or knitted fabric or sheet, combinations thereof, or coated variants thereof (e.g., coated with an air-permeable coating). In some embodiments, the housing membrane 114 may be an SMS (spunbonded-meltblown-spunbonded) nonwoven fabric.

In some embodiments, the housing membrane 114 is a nonwoven flash spun plexifilamentary sheet of polyethylene. Such sheets are available under the tradename Tyvek^{®} from DuPont in Wilmington, DE. As used herein, "plexifilament" means a three-dimensional integral network or web of a multitude of thin, ribbon-like, film-fibril elements of random length. Typically, these have a mean film thickness of less than about 4 micrometers and a median fibril width of less than about 25 micrometers. The average film-fibril cross sectional area if mathematically converted to a circular area would yield an effective diameter between about 1 micrometer and about 25 micrometers. In plexifilamentary structures, the film-fibril elements intermittently unite and separate at irregular intervals in various places throughout the length, width and thickness of the structure to form a continuous three-dimensional network. Examples of plexifilamentary webs are those produced by the flash spinning processes described in U.S. Patent Nos. 3,081,519 (Blades et al.), 3,169,899 (Steuber), 3,227,784 (Blades et al.), and 3,851,023 (Brethauer et al .)

The housing membrane 114 may also be constructed from one component or multiple components, including, but not limited to, a top and a bottom (as shown in FIG. 1), that may each be comprised of the same or different materials. In some embodiments, the housing membrane 114 is absent of any joints or seals, and in other embodiments the housing membrane 114 may contain one or more joints or seals.

The frame 116 provides structural support and balance for the housing membrane 114. The frame 116 may be any suitable shape or size, and may be arranged in any pattern. The frame 116 may be constructed from one or more of any suitable material known in the art, including, but not limited to, natural or synthetic fibers (e.g., rope/netting), rubber, urethane, plastic, glass, ceramic, metal, alloy, and composites thereof. The frame 116 is preferably a material that is corrosion-resistant. The frame 116 may also be constructed from one component or multiple components, that may each be comprised of the same or different materials. In some embodiments, the frame 116 may sit or be positioned on the ground/walking level by any suitable manner known in the art, and in other embodiments, it may be held or positioned above/off the ground/walking level by any suitable manner known in the art, including, but not limited to, rope, chains, shelves, etc.

The solution 122 in the housing membrane 114 creates a water table that may be at various levels in the housing membrane 114, including as high as the top of the housing membrane 114. In some embodiments, the solution 122 occupies at least about 5% of the volume within the housing membrane 114, in other embodiments at least about 10% of the volume within the housing membrane 114, in other embodiments at least about 20% of the volume within the housing membrane 114, in other embodiments at least about 50% of the volume within the housing membrane 114, in other embodiments at least about 80% of the volume within the housing membrane 114, in other embodiments at least about 90% of the volume within the housing membrane 114, in other embodiments 100% of the volume within the housing membrane 114. The solution 122 may be any solution known in the art that is used to grow plants, including, but not limited to, solutions that include water, nutrients, fungicide, insecticide, growth regulators or promotors or enzymes, pH adjusters, fertilizers, and variations thereof. Nutrients may include one or more of any nutrient known in the art that is used to grow plants, including, but not limited to, N (Nitrogen), P (Phosphorus), K (Potassium), Ca (Calcium), Cl (Chlorine), Cu (Copper), Fe (Iron), Mg (Magnesium), Mn (Manganese), Mo (Molybdenum), S (Sulfur), B (Boron), Zn (Zinc), and variations thereof.

In some embodiments, a plurality of housing membranes 114 may be included in the hydroponic system 110, including, for example, at least 10 housing membranes, at least 25 housing membranes, at least 50 housing membranes, at least 100 housing membranes, at least 500 housing membranes, at least 1000 housing membranes, at least 2000 housing membranes, at least 3000 housing membranes, at least 4000 housing membranes, at least 5000 housing membranes, and at least 10,000 housing membranes. The housing membranes 114 may be the same or different shapes and may be arranged randomly or in any configuration vertically or horizontally. For instance, multiple housing membranes 114 may be aligned in adjacent rows, positioned above and below each other, or both, to form a multi-row and/or multi-level hydroponic system 110.

In some embodiments, a plurality of plant support structures 112 may be included in the hydroponic system 110, including, for example, at least 10 plant support structures, at least 25 plant support structures, at least 50 plant support structures, at least 100 plant support structures, at least 500 plant support structures, at least 1000 plant support structures, at least 2000 plant support structures, at least 3000 plant support structures, at least 4000 plant support structures, at least 5000 plant support structures, and at least 10,000 plant support structures.

In some embodiments, the system 110 may be portable.

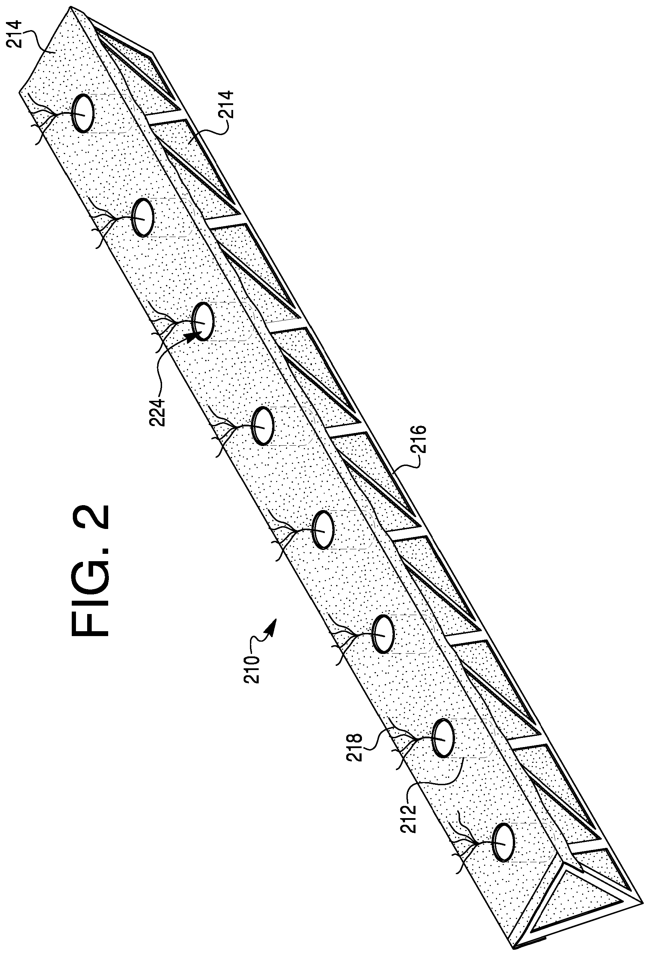

FIG. 2 illustrates an exemplary hydroponic system 210 with a plurality of plant support structures 212. The hydroponic system 210 comprises a plurality of plant support structures 212 that hold plant matter 218, a housing membrane 214 that houses the plurality of plant support structures 212 and a solution 222 (not shown), and a frame 216. The housing membrane 214 includes a plurality of openings 224 for the one or more plant support structures 212 to fit into.

As shown in FIG. 2, the frame 216 borders portions of the housing membrane 214 for support, including being arranged in a chevron pattern along the sides of the housing membrane 214. However, in some embodiments, the frame 216 may be designed and constructed in any suitable manner, including in any position, arrangement, pattern, size, or shape, to provide support to the housing membrane 214 while allowing air to enter through at least portions of the housing membrane 214.

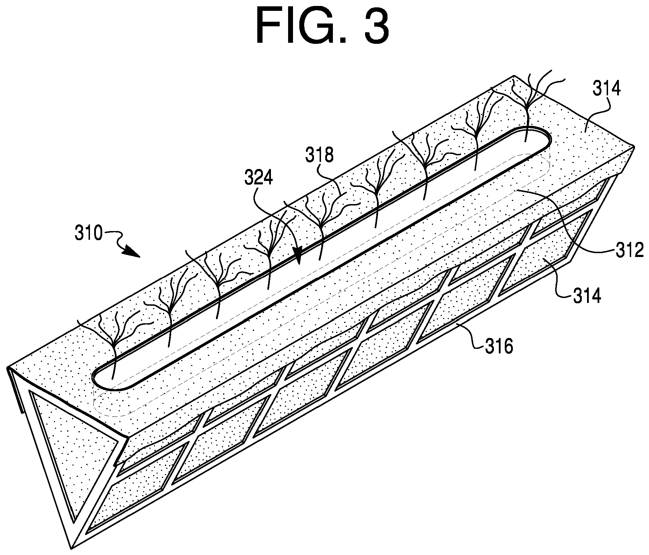

FIG. 3 illustrates an exemplary hydroponic system 310 that includes a housing membrane 314 with one plant support structure 312 that holds a plurality of plant matter 318. The hydroponic system 310 comprises a plant support structure 312 that holds a plurality of plant matter 318, a housing membrane 314 that houses the plant support structure 312 and a solution 322 (not shown), and a frame 316. The housing membrane 314 includes an opening 324 for the plant support structure 312 to fit into. As shown in FIG. 3, the plant support structure 312 and the opening 324 are shaped like an elongated racetrack oval. However, in some embodiments, the plant support structure 312 and the opening 324 may be any suitable shape or size, and may be positioned anywhere on the housing membrane 314.

As shown in FIG. 3, the frame 316 borders portions of the housing membrane 314 for support, including being arranged in a checked pattern along the sides of the housing membrane 314. In some embodiments, the frame 316 may be designed and constructed in any suitable manner, including in any position, arrangement, pattern, size, or shape, to provide support to the housing membrane 314 while allowing air to enter through at least portions of the housing membrane 314.

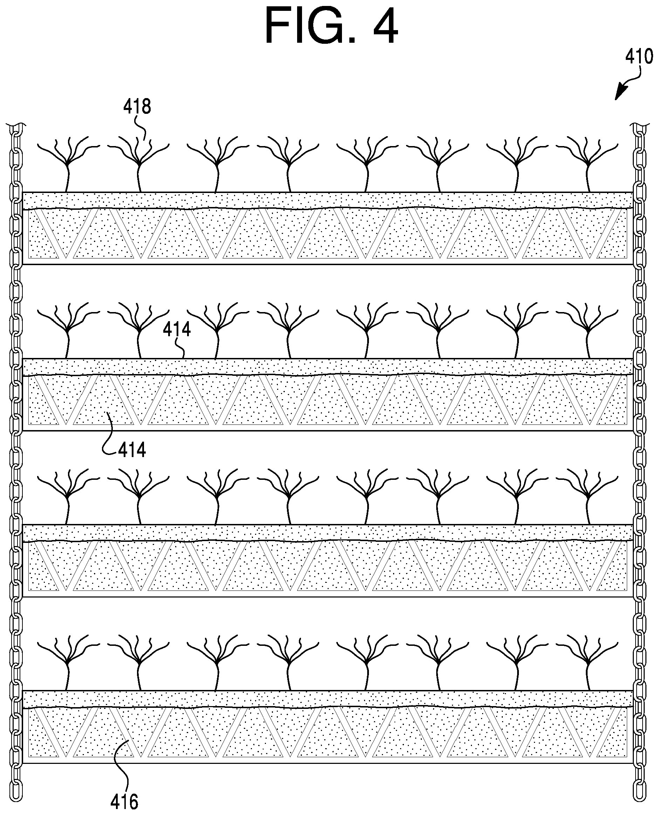

FIG. 4 illustrates an exemplary hydroponic system 410 with a plurality of housing membranes 414 arranged vertically. The hydroponic system 410 comprises a plurality of housing membranes 414 and a plurality of frames 416. The plurality of housing membranes 414 house one or more plant support structures 412 (not shown) and a solution 422 (not shown). The plurality of housing membranes 414 include one or more openings 424 (not shown) for the one or more plant support structures 412 to fit into. The one or more plant support structures 412 (not shown) hold plant matter 418.

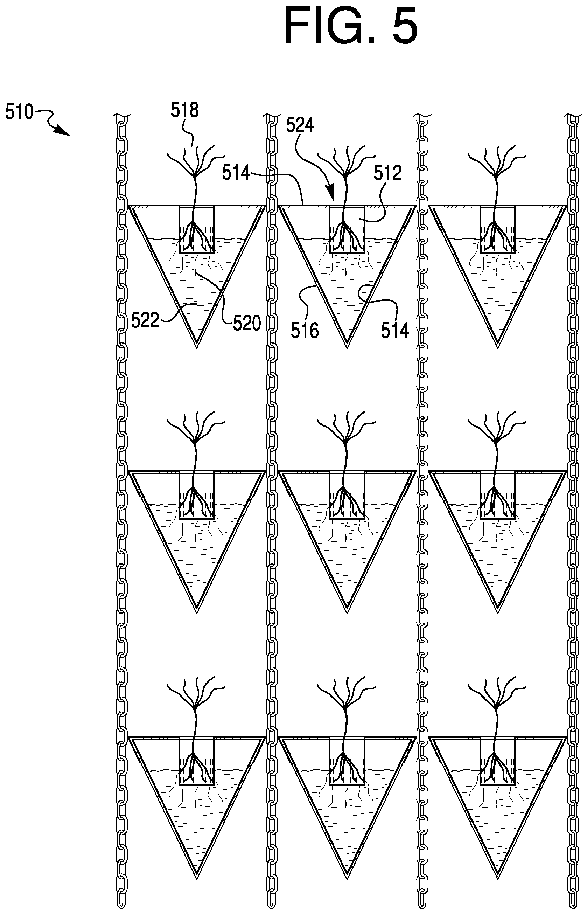

FIG. 5 illustrates an exemplary hydroponic system 510 with a plurality of housing membranes 514 arranged horizontally and vertically. The hydroponic system 510 comprises a plurality of housing membranes 514 and a plurality of frames 516. The plurality of housing membranes 514 house one or more plant support structures 512, and a solution 522. The plurality of housing membranes 514 include one or more openings 524 for the one or more plant support structures 512 to fit into. The one or more plant support structures 512 hold plant matter 518. The one or more plant support structures 512 have one or more holes in the sides and/or base of the one or more plant support structures 512 to allow the solution 522 to feed the plant matter 518 and/or roots 520 of the plant matter 518.

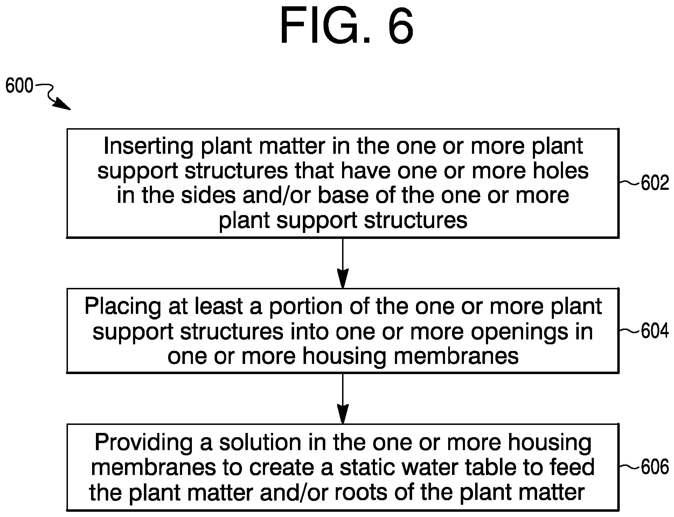

FIG. 6 illustrates a flowchart of an embodiment of a method 600 for growing plants that, for example, may be used with the hydroponic system 110 as shown in FIG. 1. The method 600 comprises a step 602 of inserting plant matter 118 in the one or more plant support structures 112 that have one or more holes in the sides and/or base of the one or more plant support structures 112.

The method 600 further comprises a step 604 of placing at least a portion of the one or more plant support structures 112 into the one or more openings 124 in one or more housing membranes 114.

The method 600 further comprises a step 606 of providing a solution 122 in the one or more housing membranes 114 to create a static water table to feed the plant matter 118 and/or roots 120 of the plant matter 118.

Importantly, the steps may be performed in any order. For example, when carrying out the method 600 for growing plants, the step 602 of inserting plant matter 118 in the one or more plant support structures 112 that have one or more holes in the sides and/or base of the one or more plant support structures 112 may occur after the step 604 of placing at least a portion of the one or more plant support structures into the one or more openings 124 in the one or more housing membranes 114 and/or after the step 606 of providing a solution 122 in the one or more housing membranes 114 to create a static water table. Likewise, the step 606 of providing a solution 122 in the one or more housing membranes 114 to create a static water table may occur before the step 602 of inserting plant matter 118 in the one or more plant support structures 112 that have one or more holes and/or before the step 604 of placing at least a portion of the one or more plant support structures into the one or more openings 124 in the one or more housing membranes 114. Additional steps may also be included in the method 600 for growing plants.

### TEST METHODS

Moisture vapor transmission rate was measured according to ATSM E96.

Gurley Hill porosity was measured according to ISO 5636-5.

Resistance to water penetration was measured according to EN 20811.

Maximum elongation was measured according to EN 12311-1.

Elastic modulus was calculated according to EN 12311-1 using a cross-sectional area calculated from a thickness determined by EN ISO 534.

Total reflectivity was measured according to ASTM E1164-02.

Turbidity was measured according to IS 3025 - Part 16.

Dissolved oxygen (mg/L) was measured according to APHA 23rd ed 4500-O-C.

pH at 25 °C was measured according to 23rd ed 4500-H⁺(B).

Total dissolved solids (mg/L) was measured according to APHA 23rd ed 2540-Solid(C).

Total suspended solids (mg/L) was measured according to APHA 23rd ed 2540-Solid(D).

Conductivity (µS/cm) at 25 °C was measured according to 23rd ed 2510 B.

Total organic carbon (ppb) was measured according to APHA 23rd ed 5310-TOC-(B).

Total plate count (cfu/ml) was measured according to IS: 5402:2012.

Coli forms (cfu/100ml) was measured according to IS: 15185:2002.

Yeast and mold (cfu/100ml) was measured according to IS 5403:1999 (Reaffirmed - 2009).

Algae (Present/absent in 100ml) was measured according to APHA 22nd ed 10200 F (Staining Technique).

### EXAMPLES

The following examples are given to illustrate certain embodiments of the invention and should not be interpreted as limiting it in any way.

### EXAMPLE 1

A hydroponics set up was prepared in a greenhouse (at 28°C, 65 % relative humidity) using a Tyvek^{®} 1073B housing membrane. A 5 m long frame was constructed from metal in the shape of an inverted triangular cross-section (V shaped: 15 cm height, 25 cm base) to provide structural support and balance for the housing membrane. A housing membrane was constructed from Tyvek^{®} 1073B and placed along all the edges of the frame and tethered to the frame using adhesive tape. The top flat surface of the housing membrane included openings 2" in diameter spaced 12" apart, into which plant support structures (i.e., seed cups in this instance), having holes, containing rice plants in 40 g soil were inserted. The plant support structures were 3" in height with a diameter of 2". The housing membrane was filled with approximately 65 L of a nutrient solution to a height of approximately 12.5 cm so that the nutrient solution was in constant direct contact with the plant support structures. Additional nutrient solution was added periodically during the experiment to maintain the height of approximately 12.5 cm. The composition of the nutrient solution was as follows:

| **Fertilizer** | **Composition** | **g/100L** |
|---|---|---|
| Ammonium Sulphate | N-21%, S-24% | 10 |
| 19:19:19 | N-19%, P-19%, K-19% | 27 |
| 00:00:50 | K- 50% | 34 |
| MgSO₄ | Mg- 9.6%, S-12% | 36 |
| FeSO₄ (EDTA) | Fe-12% | 1.0 |
| Multiplex | Zn-5%, Fe-1%, Mn-1%, Br-0.5% | 2.0 |
| Mo | - | 0.4 |
| CaNO₃ | N-14.4%, Ca-18.8 | 90 |
| Citric Acid | Acid solution | 200 |

The plants grew to an approximate height of 1 m, with their roots growing outside of the plant support structures into the nutrient solution. To test the quality of water after 60 days, a 50 cc water sample was collected in a test tube from the bulk of the water table (i.e., from water beneath the surface of the water table). The test tube was hermetically sealed and sent for water testing within 24 hours.

### COMPARATIVE EXAMPLE 2

A hydroponics set up was prepared in a greenhouse (at 28°C, 65 % relative humidity) using a PVC pipe. The PVC pipe was 5 m long with a diameter of 5". The top side of the PVC pipe included 2" openings, formed in a row every 12 inches, into which plant support structures (i.e., seed cups in this instance), having holes, containing rice plants in 40 g soil were inserted. The plant support structures were 3" in height with a diameter of 2". The plant support structures were in constant direct contact with nutrient solution (same as Example 1). The nutrient solution was continuously flowing, with an inlet at one end of the PVC pipe and an outlet at the other end. The outlet stream fell about 1 ft. into a fiber reinforced plastic tank and a motor pumped water from the open fiber reinforced plastic tank back to the inlet pipe. This allowed sufficient oxygen to be picked up from aeration. Similar to example 1, the plants grew to an approximate height of 1 m with their roots growing into the water table. To test the quality of water after 60 days, a 50 cc water sample was collected from the fiber reinforced plastic open tank which represents the average water quality conditions next to the plant roots. The test tube was hermetically sealed and sent for water testing within 24 hours.

### COMPARATIVE EXAMPLE 3

A conventional soil cultivation set up was prepared in a greenhouse (at 28 °C, 65 % relative humidity) using germinated rice plants in pots with 4 kg of soil. Water and fertilizer were provided at regular intervals and the rice plants were grown to an approximate height of 1 m with their roots growing into the soil. To test the quality of water in the pots after 60 days, a 50 cc water sample was collected. The test tube was hermetically sealed and sent for water testing within 24 hours.

**Table 1A (Physical Parameters)**

| **Sample** | **Turbidity (NTU)** | **pH at 25 °C** | **Dissolved Oxygen (DO) (mg/L)** | **Total Dissolved Solids (mg/L)** | **Total Suspended Solids (mg/L)** | **Conductivity at 25 °C (µS/cm)** |
|---|---|---|---|---|---|---|
| Example 1 | 2.62 | 8.24 | 2.4 | 458 | 6.3 | 662 |
| Comparative Example 2 | 6.72 | 4.21 | 2.6 | 1382 | 13.78 | 1988 |
| Comparative Example 3 | 48.9 | 7.32 | 4.4 | 746 | 74.6 | 1082 |

**Table 1B (Biological Parameters)**

| **Sample** | **Total organic carbon (ppb)** | **Total Plate Count (cfu/ml)** | **Coli Forms (cfu/100ml)** | **Algae (Present/absent in 100ml)** | **Yeast and Mold (cfu/100ml)** |
|---|---|---|---|---|---|
| Example 1 | 1724 | 72 | Not detected | Absent | Not detected |
| Comparative Example 2 | 10124 | 168 | Not detected | Absent | Not detected |
| Comparative Example 3 | 15470 | 270 | 40 | Present | Not detected |

Water analysis of the examples, as shown in Tables 1A and 1B, show that Example 1 had a lower turbidity, total suspended solids, total organic content, and total plate count (i.e., bacteria count) than Comparative Example 2 and Comparative Example 3. The dissolved oxygen levels in Example 1 were comparable to Comparative Example 2, even with no mechanical addition through aeration.

### EXAMPLE 4

A hydroponics set up was prepared in a greenhouse (at 28 °C, 65 % relative humidity) using a Tyvek^{®} 1073B housing membrane, as described in Example 1. At the harvesting stage, approximately 90 days after the date of sowing, plant productivity was monitored by measuring the number of tillers and the total seed weight per plant. Other productivity output parameters were measured including the number of filled grains per plant and the days for 85% maturity of the seed (starting from the date of sowing).

### COMPARATIVE EXAMPLE 5

A conventional soil cultivation set up was prepared in a greenhouse (at 28 °C, 65 % relative humidity) using germinated rice plants in pots with 4 kg of soil, as described in Comparative Example 3. Productivity parameters as described in example 4 were measured (same date of sowing and harvesting as Example 4). A comparison of the productivity parameters measured in Example 4 and Comparative Example 5 is shown in Table 2.

**Table 2: Comparison of plant productivity**

| Productivity metric | **Average Number of Tillers** | **Average number of filled grain** | **Average seed weight g** | **Average days for 85% maturation** |
|---|---|---|---|---|
| Example 4 | 29.2 | 3113.7 | 55.5 | 79 |
| Comparative example 5 | 22.0 | 2370.5 | 42.0 | 85 |
| % difference | 32.6 | 31.4 | 32.1 | -6 days |

Table 2 indicates an improved plant productivity in Example 4 compared to Comparative Example 5. Example 4 demonstrates a productivity increase of 32.6 % with an earlier maturation by 6 days.

### COMPARATIVE EXAMPLE 6

A hydroponics set up was prepared in a greenhouse (at 28°C, 65 % relative humidity) using a PVC pipe, as described in Comparative Example 2. A 1 HP motor was used to continuously circulate aerated water through the PVC pipe. Table 3 shows the power consumption comparison between Comparative Example 6 and Example 1.

**Table 3: Comparison of power consumption**

| **Power Consumption** | **Motor Used** | **Power Consumption kWh/Day** |
|---|---|---|
| Comparative Example 6 | 1 HP | 17.9 |
| Example 1 | 0 | 0 |

Clearly, the amount of power consumed is dramatically higher for a PVC pipe-based hydroponics system with continuous aeration, compared to a system without the need for power.

### PROPHETIC EXAMPLES - EXAMPLE 7, COMPARATIVE EXAMPLE 8, & EXAMPLE 9

The hydroponics set up from Example 1, Comparative Example 2, and Example 4 are separately and respectively prepared in Example 7, Comparative Example 8, and Example 9, except in each case, soil in the plant support structures is replaced with a soilless medium.

When comparing Example 7, Comparative Example 8, and Comparative Example 3, the examples demonstrate similar results (physical and biological parameters) to those indicated in Tables 1A and 1B for Example 1, Comparative Example 2, and Comparative Example 3. Water analysis of the examples shows that Example 7 has a lower turbidity, total suspended solids, total organic content, and total plate count (i.e., bacteria count) than Comparative Example 8 and Comparative Example 3. The dissolved oxygen levels in Example 7 are comparable to Comparative Example 8, even with no mechanical addition through aeration.

When comparing Example 9 to Comparative Example 5, the examples demonstrate similar results (plant productivity) to those indicated in Table 2 for Example 4 and Comparative Example 5. Example 9 shows improved plant productivity compared to Comparative Example 5. Example 9 also demonstrates a significant productivity increase with an earlier maturation when compared to Comparative Example 5.

When comparing Example 7 to Comparative Example 6, the examples demonstrate similar results (power consumption) to those indicated in Table 3 for Example 1 and Comparative Example 6. Comparative Example 6 shows that the amount of power consumed is dramatically higher than in Example 7.

### CONCLUSION

The hydroponic system for growing plants as described herein therefore has many advantages in lowering energy costs, improved physical and biological parameters, improved productivity (e.g., earlier maturation of plants and increased yield per plant), lowered capital costs, lower maintenance costs, and an ability to cultivate more effectively. The ability to support oxygen requirements for roots in the presence of a constant water table can also be applied in many other applications such as aquaculture farming, plant irrigation, general architectural water bodies, etc.

While various embodiments of the present invention have been described above, it should be understood that they have been presented by way of example, and not limitation. It will be apparent to persons skilled in the relevant art(s) that various changes in form and detail can be made therein without departing from the scope of the present invention. Thus, it should be appreciated that, while the invention has been described with reference to the above exemplary embodiments, other embodiments are within the scope of the claims. Moreover, it should be understood that the exemplary embodiments described herein may be combined to form other embodiments. After reading the above description, it will be apparent to one skilled in the relevant art(s) how to implement the invention in alternative embodiments. Thus, the present invention should not be limited by any of the above-described exemplary embodiments.

## Claims

1. A hydroponic system (110) comprising:
one or more plant support structures (112, 212, 412, 512) that hold plant matter (118, 218, 518); wherein the one or more plant support structures (112, 212, 412, 512) have one or more holes;
one or more housing membranes (114, 414, 514) that are air-permeable and water-resistant, house a solution (122, 222, 322, 422, 522) and at least a portion of the one or more plant support structures (112, 212, 412, 512); and
one or more frames (416, 516) that support the one or more housing membranes (114, 414, 514), **characterised in that** the one or more housing membranes (114, 414, 514) have one or more openings (124, 224, 324, 424, 524) into which at least a portion of the one or more plant support structures (112, 212, 412, 512) fit.

2. The hydroponic system (110) of claim 1, wherein the one or more plant support structures (112, 212, 412, 512) further comprise a soilless plant medium.

3. The hydroponic system (110) of claim 1, wherein the one or more plant support structures (112, 212, 412, 512) are connected to the one or more housing membranes (114, 414, 514) or the one or more frames (416, 516).

4. The hydroponic system (110) of claim 1, wherein the one or more housing membranes (114, 414, 514) have a Gurley Hill porosity of from about 1 to about 100 seconds per 100 cc air, preferably of from about 10 to about 50 seconds per 100 cc air.

5. The hydroponic system (110) of claim 1, wherein the one or more housing membranes (114, 414, 514) have a resistance to water penetration of from about 50 to about 1000 cm of H₂O, preferably of from about 100 to about 500 cm of H₂O.

6. The hydroponic system (110) of claim 1, wherein the one or more housing membranes (114, 414, 514) have a total reflectivity of greater than about 80%.

7. The hydroponic system (110) of claim 1, wherein the one or more housing membranes (114, 414, 514) have a moisture vapor transmission rate of from about 400 to about 3500 g/m²/day, preferably of from about 750 to about 2000 g/m²/day.

8. The hydroponic system (110) of claim 1, wherein the one or more housing membranes (114, 414, 514) have a maximum elongation of less than about 40%.

9. The hydroponic system (110) of claim 1, wherein the one or more housing membranes (114, 414, 514) are selected from polyolefin, polyamide, polyaramid, polyester, polyimide, polyacrylate, poly(tetrafluoroethylene), fluorinated copolymer, such as copolymer comprising tetrafluoroethylene, and/or hybrids and mixtures thereof.

10. The hydroponic system (110) of claim 1, wherein the one or more housing membranes (114, 414, 514) are polyethylene or polypropylene, preferably nonwoven flash spun plexifilamentary sheet of polyethylene.

11. The hydroponic system (110) of claim 1, wherein at least one of the one or more housing membranes (114, 414, 514) is one component or has two or more components.

12. The hydroponic system (110) of claim 1, comprising at least 10 housing membranes (114, 414, 514), or at least 25 housing membranes (114, 414, 514), or at least 50 housing membranes (114, 414, 514), or at least 100 housing membranes (114, 414, 514), or at least 500 housing membranes (114, 414, 514), or at least 1000 housing membranes (114, 414, 514), or at least 5000 housing membranes (114, 414, 514), or and at least 10,000 housing membranes (114, 414, 514).

13. The hydroponic system (110) of claim 1, wherein at least one of the one or more housing membranes (114, 414, 514) is in the shape of a triangular prism.

14. The hydroponic system (110) of claim 1
wherein the one or more plant support structures (112, 212, 412, 512) comprise a soilless plant medium and have one or more holes in the sides or base of the one or more plant support structures (112, 212, 412, 512);
wherein the one or more housing membranes (114, 414, 514) are polyolefin, and have a Gurley Hill porosity of from about 1 to about 100 seconds per 100 cc air, a resistance to water penetration of from about 100 to about 500 cm of H₂O, and a moisture vapor transmission rate of from about 400 to about 3500 g/m²/day g/m²/day; and
wherein the solution (122, 222, 322, 422, 522) comprises water and nutrients.

## Patentansprüche

1. Hydroponisches System (110), umfassend:
eine oder mehrere Pflanzenstützstrukturen (112, 212, 412, 512), die Pflanzenmaterial (118, 218, 518) halten; wobei die eine oder mehreren Pflanzenstützstrukturen (112, 212, 412, 512) ein oder mehrere Löcher aufweisen;
eine oder mehrere Gehäusemembranen (114, 414, 514), die luftdurchlässig und wasserbeständig sind, eine Lösung (122, 222, 322, 422, 522) und mindestens einen Teil der einen oder mehreren Pflanzenstützstrukturen (112, 212, 412, 512) unterbringen; und
einen oder mehrere Rahmen (416, 516), die die eine oder mehreren Gehäusemembranen (114, 414, 514) tragen, **dadurch gekennzeichnet, dass** die eine oder mehreren Gehäusemembranen (114, 414, 514) eine oder mehrere Öffnungen (124, 224, 324, 424, 524) aufweisen, in die mindestens ein Teil der einen oder mehreren Pflanzenstützstrukturen (112, 212, 412, 512) passt.

2. Hydroponisches System (110) nach Anspruch 1, wobei die eine oder mehreren Pflanzenstützstrukturen (112, 212, 412, 512) weiter ein erdloses Pflanzsubstrat umfassen.

3. Hydroponisches System (110) nach Anspruch 1, wobei die eine oder mehreren Pflanzenstützstrukturen (112, 212, 412, 512) mit der einen oder den mehreren Gehäusemembranen (114, 414, 514) oder dem einen oder den mehreren Rahmen (416, 516) verbunden sind.

4. Hydroponisches System (110) nach Anspruch 1, wobei die eine oder mehreren Gehäusemembranen (114, 414, 514) eine Gurley-Hill-Porosität von etwa 1 bis etwa 100 Sekunden pro 100 cm³ Luft, vorzugsweise von etwa 10 bis etwa 50 Sekunden pro 100 cm³ Luft aufweisen.

5. Hydroponisches System (110) nach Anspruch 1, wobei die eine oder mehreren Gehäusemembranen (114, 414, 514) einen Wasserdurchdringungswiderstand von etwa 50 bis etwa 1000 cm H₂O, vorzugsweise von etwa 100 bis etwa 500 cm H₂O aufweisen.

6. Hydroponisches System (110) nach Anspruch 1, wobei die eine oder mehreren Gehäusemembranen (114, 414, 514) eine Gesamtreflexion von mehr als etwa 80% aufweisen.

7. Hydroponisches System (110) nach Anspruch 1, wobei die eine oder mehreren Gehäusemembranen (114, 414, 514) eine Wasserdampfdurchlässigkeit von etwa 400 bis etwa 3500 g/m²/Tag, vorzugsweise von etwa 750 bis etwa 2000 g/m²/Tag aufweisen.

8. Hydroponisches System (110) nach Anspruch 1, wobei die eine oder mehreren Gehäusemembranen (114, 414, 514) eine maximale Dehnung von weniger als etwa 40% aufweisen.

9. Hydroponisches System (110) nach Anspruch 1, wobei die eine oder mehreren Gehäusemembranen (114, 414, 514) ausgewählt sind aus Polyolefin, Polyamid, Polyaramid, Polyester, Polyimid, Polyacrylat, Poly(tetrafluorethylen), fluoriertem Copolymer, wie beispielsweise einem Tetrafluorethylen-haltigen Copolymer, und/oder Hybriden und Mischungen davon.

10. Hydroponisches System (110) nach Anspruch 1, wobei die eine oder mehreren Gehäusemembranen (114, 414, 514) aus Polyethylen oder Polypropylen bestehen, vorzugsweise aus einem vliesstoffartigen, flash-gesponnenen Plexifilamentblatt aus Polyethylen.

11. Hydroponisches System (110) nach Anspruch 1, wobei mindestens eine der einen oder mehreren Gehäusemembranen (114, 414, 514) eine Komponente ist oder zwei oder mehr Komponenten aufweist.

12. Hydroponisches System (110) nach Anspruch 1, umfassend mindestens 10 Gehäusemembranen (114, 414, 514), oder mindestens 25 Gehäusemembranen (114, 414, 514), oder mindestens 50 Gehäusemembranen (114, 414, 514), oder mindestens 100 Gehäusemembranen (114, 414, 514), oder mindestens 500 Gehäusemembranen (114, 414, 514), oder mindestens 1000 Gehäusemembranen (114, 414, 514), oder mindestens 5000 Gehäusemembranen (114, 414, 514) oder und mindestens 10.000 Gehäusemembranen (114, 414, 514).

13. Hydroponisches System (110) nach Anspruch 1, wobei mindestens eine der einen oder mehreren Gehäusemembranen (114, 414, 514) in der Form eines dreieckigen Prismas vorliegt.

14. Hydroponisches System (110) nach Anspruch 1, wobei die eine oder mehreren Pflanzenstützstrukturen (112, 212, 412, 512) ein erdloses Pflanzensubstrat umfassen und ein oder mehrere Löcher in den Seiten oder in der Basis der einen oder mehreren Pflanzenstützstrukturen (112, 212, 412, 512) aufweisen;
wobei die eine oder mehreren Gehäusemembranen (114, 414, 514) aus Polyolefin bestehen und eine Gurley-Hill-Porosität von etwa 1 bis etwa 100 Sekunden pro 100 cm³ Luft, einen Wasserdampfdurchlässigkeitswiderstand von etwa 100 bis etwa 500 cm H₂O und eine Wasserdampfdurchlässigkeit von etwa 400 bis etwa 3500 g/m²/Tag g/m²/Tag aufweisen; und
wobei die Lösung (122, 222, 322, 422, 522) Wasser und Nährstoffe umfasst.

## Revendications

1. Système hydroponique (110) comprenant :
une ou plusieurs structures de support pour plantes (112, 212, 412, 512) qui contiennent de la matière végétale (118, 218, 518) ; dans lequel la ou les structures de support pour plantes (112, 212, 412, 512) présentent un ou plusieurs trous ;
une ou plusieurs membranes de logement (114, 414, 514) perméables à l'air et résistantes à l'eau, contenant une solution (122, 222, 322, 422, 522) et au moins une partie d'une ou plusieurs structures de support pour plantes (112, 212, 412, 512) ; et
un ou plusieurs cadres (416, 516) qui supportent une ou plusieurs membranes de logement (114, 414, 514), **caractérisé en ce que** la ou les membranes de logement (114, 414, 514) présentent une ou plusieurs ouvertures (124, 224, 324, 424, 524) dans lesquelles s'insère au moins une partie de la ou des structures de support pour plantes (112, 212, 412, 512).

2. Système hydroponique (110) selon la revendication 1, dans lequel la ou les structures de support pour plantes (112, 212, 412, 512) comprennent en outre un milieu de culture hors-sol.

3. Système hydroponique (110) selon la revendication 1, dans lequel la ou les structures de support pour plantes (112, 212, 412, 512) sont reliées à la ou aux membranes de logement (114, 414, 514) ou au ou aux cadres (416, 516).

4. Système hydroponique (110) selon la revendication 1, dans lequel la ou les membranes de logement (114, 414, 514) présentent une porosité de Gurley Hill d'environ 1 à environ 100 secondes par 100 cc d'air, de préférence d'environ 10 à environ 50 secondes par 100 cc d'air.

5. Système hydroponique (110) selon la revendication 1, dans lequel la ou les membranes de logement (114, 414, 514) présentent une résistance à la pénétration d'eau d'environ 50 à environ 1000 cm de H₂O, de préférence d'environ 100 à environ 500 cm de H₂O.

6. Système hydroponique (110) selon la revendication 1, dans lequel la ou les membranes de logement (114, 414, 514) présentent une réflectivité totale supérieure à environ 80 %.

7. Système hydroponique (110) selon la revendication 1, dans lequel la ou les membranes de boîtier (114, 414, 514) présentent un taux de transmission de vapeur d'eau d'environ 400 à environ 3500 g/m²/jour, de préférence d'environ 750 à environ 2000 g/m²/jour.

8. Système hydroponique (110) selon la revendication 1, dans lequel la ou les membranes de logement (114, 414, 514) présentent un allongement maximal inférieur à environ 40 %.

9. Système hydroponique (110) selon la revendication 1, dans lequel la ou les membranes de logement (114, 414, 514) sont choisies parmi la polyoléfine, le polyamide, le polyaramide, le polyester, le polyimide, le polyacrylate, le poly(tétrafluoroéthylène), un copolymère fluoré, tel qu'un copolymère comprenant du tétrafluoroéthylène, et/ou des hybrides et des mélanges de ceux-ci.

10. Système hydroponique (110) selon la revendication 1, dans lequel la ou les membranes de logement (114, 414, 514) sont en polyéthylène ou en polypropylène, de préférence en feuille plexifilamentaire non tissée filée flash de polyéthylène.

11. Système hydroponique (110) selon la revendication 1, dans lequel au moins une de la ou des membranes de logement (114, 414, 514) est un composant ou comporte deux composants ou plus.

12. Système hydroponique (110) selon la revendication 1, comprenant au moins 10 membranes de logement (114, 414, 514), ou au moins 25 membranes de logement (114, 414, 514), ou au moins 50 membranes de logement (114, 414, 514), ou au moins 100 membranes de logement (114, 414, 514), ou au moins 500 membranes de logement (114, 414, 514), ou au moins 1000 membranes de logement (114, 414, 514), ou au moins 5000 membranes de logement (114, 414, 514), ou et au moins 10 000 membranes de logement (114, 414, 514).

13. Système hydroponique (110) selon la revendication 1, dans lequel au moins une de la ou des membranes de logement (114, 414, 514) présente la forme d'un prisme triangulaire.

14. Système hydroponique (110) selon la revendication 1 dans lequel la ou les structures de support pour plantes (112, 212, 412, 512) comprennent un milieu de culture hors-sol et présentent un ou plusieurs trous sur les côtés ou à la base de la ou des structures de support pour plantes (112, 212, 412, 512) ;
dans lequel la ou les membranes de logement (114, 414, 514) sont en polyoléfine et présentent une porosité de Gurley Hill d'environ 1 à environ 100 secondes par 100 cc d'air, une résistance à la pénétration de l'eau d'environ 100 à environ 500 cm de _{H2O} et un taux de transmission de vapeur d'eau d'environ 400 g/m²/jour à environ 3500 g/m²/jour ; et
dans lequel la solution (122, 222, 322, 422, 522) comprend de l'eau et des nutriments.
